Europäisches Patentamt

European Patent Office

Office européen des brevets

(11) Publication number: **0 251 496**
**A2**

## (12) EUROPEAN PATENT APPLICATION

(21) Application number: **87304824.3**

(22) Date of filing: **01.06.87**

(51) Int. Cl.4: **G01J 5/58**

(30) Priority: **03.06.86 GB 8613392**

(43) Date of publication of application:
**07.01.88 Bulletin 88/01**

(84) Designated Contracting States:
**AT BE CH DE ES FR GB GR IT LI LU NL SE**

(71) Applicant: **BICC Public Limited Company**
**Devonshire House Mayfair Place**
**London W1X 5FH(GB)**

(72) Inventor: **Jones, Gordon Rees**
**17 Brimstage Close Heswall**
**Wirral MerseysideL60 1YE(GB)**

(74) Representative: **Gadsden, Robert Edward et al**
**BICC Group Patents Department BICC**
**Research & Engineering Limited 38 Ariel**
**Way Wood Lane**
**London W12 7DX(GB)**

(54) Temperature measurement.

(57) A temperature sensor comprises a source (1) and a detector (5) in between which is radiation modulation means (3) including or comprising a material such as ruby glass, the transmittance of which with respect to wavelength varies with its temperature. The detector comprises at least first and second photoresponsive elements (6),(7), the responsivity with respect to wavelength of the first element (6) being different from that of the second (7). A microprocessor (10) calculates, from the signals from the photoresponsive elements (6),(7), the colour of the light reaching the detector (5) as represented by two or more parameters on the Chromaticity (CIE) Diagram, and interprets the colour in terms of the temperature of the sensor.

Fig.1.

## TEMPERATURE MEASUREMENT

This invention relates to temperature measurement and in particular to a temperature sensor employing a material the transmitivity of which varies with its temperature.

It is known that certain materials, such as ruby glass, have transmission characteristics which include a sharp absorption edge the wavelength of which is temperature dependent. The use of such materials in temperature sensors has been postulated, with detectors monitoring the intensity of radiation at one or more wavelengths. The present invention seeks to provide an improvement to this type of temperature sensor.

Accordingly, there is provided a temperature sensor including a source and a detector, the source being adapted to propagate polychromatic light along a path to the detector, and radiation modulation means supported in the said path, the radiation modulation means including or comprising a material the transmittance of which with respect of wavelength varies with its temperature, the detector comprising at least first and second photo-responsive elements, the responsivity with respect to wavelength of the first element being different from that of the second, signals from the photo-responsive elements being fed to analysis means which calculates, from the signals from the photo-responsive elements, the colour of the radiation incident on the detector as represented by two or more parameters on the Chromaticity (CIE) Diagram, the analysis means being adapted to interpret the colour of the radiation reaching the detector in terms of the temperature of the sensor.

In one convenient arrangement two different photo-responsive elements are employed, each with its own wavelength responsivity characteristic. Alternatively, one or both of the photo-responsive elements includes a coloured filter to impart a colour response characteristic, thereby allowing two identical photo-responsive elements to be employed, if desired. Preferably the responsivity with respect to wavelength of the at least first and second photo-responsive elements are such that their respective wavelength/intensity curves overlap for at least a part of the wavelength spectrum.

A change in colour is therefore determined by assessing the change in the whole of a selected part of the spectrum (colour modulation), as opposed to merely detecting the change at one or more selected wavelengths (wavelength modulation). Thus a change from colour A (represented by wavelength/intensity curve A) to colour B (represented by wavelength/intensity curve B) will be calculated from the area between the two curves, thereby giving a more complete analysis of "true" colour. Wavelength modulation is limited in that it is a calculation based on the distance between the curves at one or more selected wavelengths.

By the term "polychromatic light" there is herein meant any multi-wavelength radiation, and is specifically meant to include both visible light and infra red radiation. The term "colour", whilst used herein for ease of understanding, should in no way imply that only visible light may be employed. Where the sensor employs radiation outside the visible spectrum, the term "colour" will refer to the spectral distribution of the radiation.

Preferably the material the transmittance of which with respect to wavelength varies with its temperature comprises ruby glass or neodinium glass. The radiation modulation means conveniently comprises a filter strip of the glass. Alternatively the radiation modulation means comprises a glass sphere, or conceivably a glass cylinder.

There is preferably provided display means adapted to display the temperature interpreted by the analysis means. The display may be in the form of a scale, or alternatively a digital display such as an LED display may be provided.

Preferably the analysis means includes a read only memory and a random access memory, the read only memory having stored therein perdetermined values of colour as represented by two or more parameters on the Chromaticity (CIE) Diagram and corresponding predetermined values for the temperature of the sensor, the random access memory storing the two or more parameters representing the colour of the radiation incident on the detector, the analysis means comparing the parameters with the predetermined parameters stored in the read only memory to derive the corresponding measured value of the temperature of the sensor. This arrangement has the advantage that no complex real time calculation is necessary in order to establish a temperature reading, as selected results are stored in the read only memory of the analysis means. Should the temperature dependent material of the sensor be changed, or the temperature range over which the sensor is required to work be altered, the read only memory can readily be reprogrammed or substituted for another. The analysis means preferably comprises a microprocessor.

The invention further resides in a method of measuring temperature employing a temperature sensor as hereinbefore described. In particular, a method of measuring temperature comprises the steps of propagating polychromatic light along a light path; supporting in the light path radiation modulation means including or comprising a material the transmittance of which with respect to wavelength varies with its temperature; detecting the radiation emerging from the radiation modulation means with a detector comprising at least first and second photo-responsive elements, the responsivity with respect to wavelength of the first element being different from that of the second; calculating, from the signals from the photo-responsive elements, the colour of the radiation incident on the detector as represented by two or more parameters on the Chromaticity (CIE) Diagram; and interpreting the colour of the radiation incident on the detector in terms of the temperature of the sensor.

The invention will now be further described, by way of example only, with reference to the accompanying drawings in which;

Figure 1 is a schematic diagram of temperature sensing apparatus in accordance with the invention;

Figure 2 is a graph of the transmitivity with respect to wavelength of ruby glass at different temperatures; and

Figure 3 is a schematic view of a temperature sensing head forming a part of apparatus according to the invention.

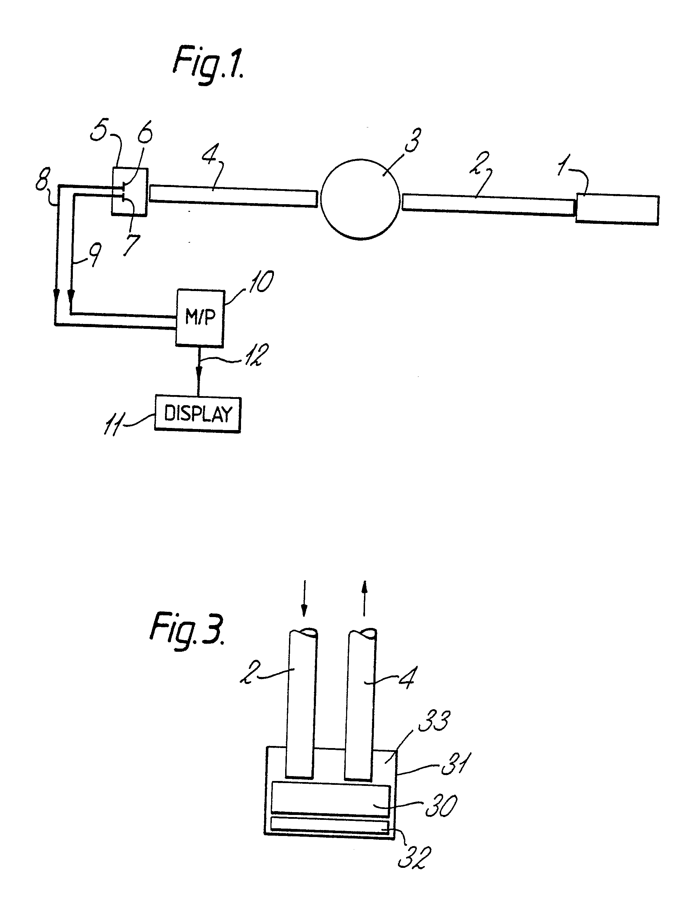

Referring to Figure 1 a temperature sensor comprises a light source 1, adjacent which is an optical fibre 2 which transmits light from the source 1 to a ruby sphere 3. Light emerging from the ruby sphere 3 is transmitted by means of a further optical fibre 4 to a detector shown generally at 5. The detector 5 comprises two photo-responsive elements 6 and 7, the responsivity of which with respect to wavelength differs one from the other. Signals from the elements 6 and 7 are fed via lines 8 and 9 respectively to a microprocessor 10. The output of the microprocessor activates a display unit 11, signals being passed thereto via line 12.

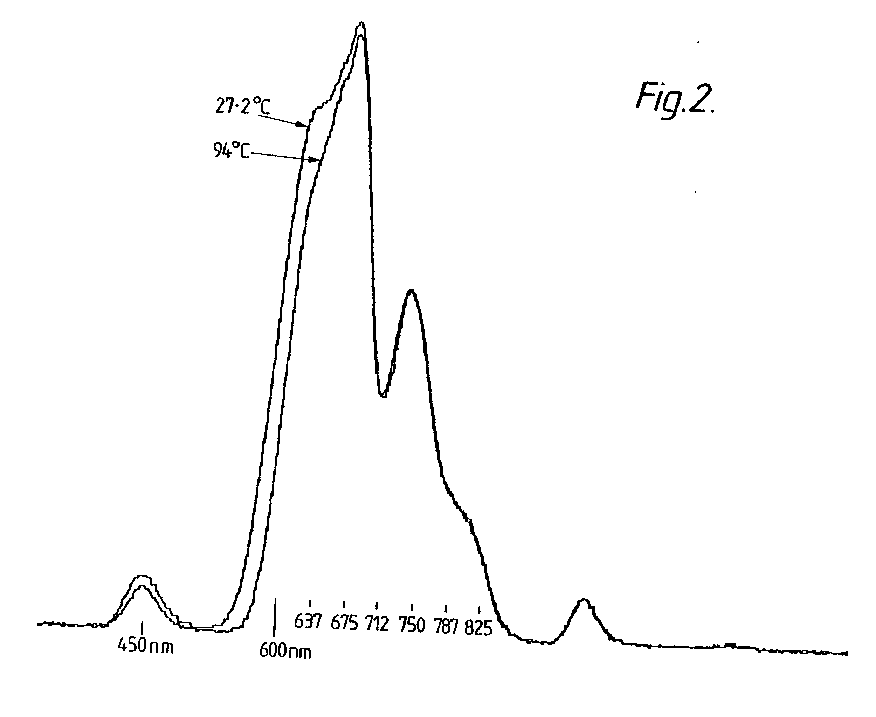

The ruby glass of which the sphere 3 is formed transmits different wavelengths of light to a differing extent depending on its temperature. Thus the component wavelengths forming the colour of the light emerging from the sphere 3 will vary with its temperature. The transmission characteristics of ruby glass for various temperatures are shown as Figure 2.

As the temperature of the sphere 3 changes, the colour of the light reaching the detector 5 changes also. The light impinging on the photo-responsive elements 6 and 7 produces two different output signals, which signals are analysed by the microprocessor 10. The microprocessor 10 calculates the colour of the light in terms of two parameters on the Chromaticity (CIE) Diagram from the signals from the photo-responsive elements 6 and 7. The parameters are compared with those in a look-up table stored in a read only memory of the microprocessor, and the corresponding value of the temperature is obtained. The temperature is then displayed by means of the display unit 11, which is typically an LED display.

Figure 3 shows a compact form of sensing head such as would be used in an industrial sensor. The optical fibres 2 and 4 are shown one alongside the other, with input fibre 2 designed to be connected to the source and output fibre 4 to be connected to the microprocessor. The optical fibres 2 and 4 extend into a housing 31 within which is a filter element 30 of ruby glass, and, on the side of the filter element remote from the optical fibres, a reflective surface 32. The components are maintained in position within the housing 31 by means of a resin composition, shown generally at 33.

Light entering the housing via optical fibre 2 is transmitted through the ruby glass filter element 30, before being reflected by the surface 32 back through the element to be transmitted away from the sensing head by the optical fibre 4. A change in the temperature of the sensing head causes a corresponding change in the colour of the light emerging via optical fibre 4, which can be interpreted by the microprocessor as previously described.

## Claims

1. A temperature sensor including a source (1) and a detector (5), the source (1) being adapted to propagate polychromatic light along a path to the detector (5), and radiation modulation means (3) supported in the said path, the radiation modulation means (3) including or comprising a material the transmittance of which with respect to wavelength varies with its temperature, characterised in that the detector (5) comprises at least first and second photo-responsive elements (6,7), the responsivity with respect to wavelength of the first element (6) being different from that of the second (7), signals from the photo-responsive elements (6,7) being fed to analysis means (10) which calculates, from the signals from the photo-responsive elements (6,7) the colour of the radiation incident on the detector (5) as respresented by two or more parameter on the Chromaticity (CIE) Diagram, the analysis means (10) being adapted to interpret the colour of the radiation reaching the detector (5) in terms of the temperature of the sensor.

2. A temperature sensor according to Claim 1 characterised in that the material the transmittance of which with respect to wavelength varies with its tamperature comprises ruby glass.

3. A temperature sensor according to Claim 1 characterised in that the material the transmittance of which with respect to wavelength varies with its temperature comprises neodinium glass.

4. A temperature sensor according to Claim 2 or Claim 3 characterised in that the radiation modulation means comprises a filter strip.

5. A temperature sensor according to Claim 2 or Claim 3 characterised in that the radiation modulation means comprises a sphere (3).

6. A temperature sensor according to Claim 2 or Claim 3 characterised in that the radiation modulation means comprises a cylinder.

7. A temperature sensor according to any of Claims 1 to 6 characterised in that there is provided display means (11) adapted to display the temperature interpreted by the analysis means (10).

8. A temperature sensor according to any of Claims 1 to 7 characterised in that the analysis means (10) includes a read only memory and a random access memory, the read only memory having stored therein predetermined values of colour as represented by two or more parameters on the Chromaticity (CIE) Diagram and corresponding predetermined values for the temperature of the sensor, the random access memory storing the two or more parameters representing the colour of the radiation incident on the detector, the analysis means (10) comparing the parameters with the predetermined parameters stored in the read only memory to derive the corresponding measured value of the temperature of the sensor.

9. A temperature sensor according to any of Claims 1 to 8 characterised in that the analysis means comprises a microprocessor (10).

10. A method of measuring temperature comprising propagating polychromatic light along a light path; and supporting in the light path radiation modulation means including or comprising a material the transmittance of which with respect to wavelength varies with its temperature; characterised by the steps of detecting the radiation emerging from the radiation modulation means with a detector comprising at least first and second photo-responsive elements, the responsivity with respect to wavelength of the first element being different from that of the second; calculating, from the signals from the photo-responsive elements, the colour of the radiation incident on the detector as represented by two or more parameters on the Chromaticity (CIE) Diagram; and interpreting the colour of the radiation incident on the detector in terms of the temperature of the sensor.

Fig.1.

Fig.3.

Fig.2.

27·2°C

94°C

637 675 712 750 787 825

450 nm

600 nm